# EUROPÄISCHE PATENTSCHRIFT

(11) **EP 2 957 537 B1**
(45) Veröffentlichungstag und Bekanntmachung des Hinweises auf die Patenterteilung: **23.11.2016**
(21) Anmeldenummer: 15001785.3
(22) Anmeldetag: 17.06.2015
(51) Int. Cl.: B66F 9/075, B60P 3/00, B62D 49/02

(54) **SCHWERLASTFAHRZEUG MIT STAPLERFUNKTION**
HEAVY GOODS VEHICLE WITH STACKER FUNCTION
POIDS-LOURD AVEC FONCTION ÉLÉVATEUR

(30) Priorität: 18.06.2014 DE 102014008720; 18.06.2014 DE 202014004907 U
(43) Veröffentlichungstag der Anmeldung: 23.12.2015
(73) Patentinhaber: Scheuerle Fahrzeugfabrik GmbH, 74629 Pfedelbach (DE)
(72) Erfinder: Kammerleitner, Ronny, 74629 Pfedelback (DE)
(74) Vertreter: Leitner, Waldemar

(56) Entgegenhaltungen:
- EP-A1- 0 775 666
- WO-A1-90/08088
- US-A- 2 897 985
- US-A- 3 272 287
- US-A- 4 948 326

## Beschreibung

Die Erfindung betrifft ein Schwerlastfahrzeug, das ein Fahrzeugmoduls mit einem Transportrahmen und einer Transportplattform besitzt, wobei das Fahrzeugmodul eine zur Ankopplung mindestens eines weiteren Fahrzeugmoduls dienende Kupplungseinrichtung aufweist.

Ein derartiges Schwerlastfahrzeug ist bekannt und wird in der Regel selbstangetrieben eingesetzt. Es wird weit verbreitet an Stätten, an denen schwere Lasten innerhalb eines abgegrenzten Bereichs wie einer Baustelle, einer Schiffswerft, eines Hafens, um nur einige Elnsatzfälle zu nennen, transportiert werden, verwendet. Die hierbei zu bewegende Schwerlast befindet sich auf einer Transportfläche des selbstangetriebenen Schwerlastfahrzeugs und eine an das Schwerlastfahrzeug angekoppelte Antriebseinrichtung, üblicherweise als PPU (Power Pack Unit) bezeichnet, sorgt für die Bereitstellung der zum Antrieb und/oder zur Lenkung der Achsen des selbstangetriebenen Schwerlastfahrzeugs erforderlichen Energie. In der Regel wird ein derartiges Schwerlastfahrzeug durch mehrere aneinander gekoppelte Fahrzeugmodule ausgebildet, wobei jedes dieser Fahrzeugmodule eine Lamellenkupplung aufweist, mit der es in Längsrichtung mit einem entsprechend ausgebildeten weiteren Fahrzeugmodul koppelbar ist. Die Transportfläche des Schwerlastfahrzeugs wird dann durch die Transportflächen der aneinander gekoppelten Fahrzeugmodule ausgebildet. Zur Erhöhung der mechanischen Stabilität zwischen zwei Fahrzeugmodulen weist jedes dieser Fahrzeugmodule am Querbalken seines die Transportfläche abstützenden Transportrahmens Öffnungen auf, sodass zwei hintereinander angeordnete Fahrzeugmodule mechanisch mittels entsprechender in diese Öffnungen eingreifender Verbindungsmittel wie Bolzen verbindbar sind. Oft werden derartige Fahrzeugmodule auch parallel angeordnet. Hierzu weisen die Längsbalken des Transportrahmens geeignete Befestigungsmittel auf, mittels derer zwei nebeneinander angeordnete Fahrzeugmodule mechanisch verbindbar sind.

Nachteilig daran ist, dass zum Auf und Abladen der zu transportierenden Last auf das Schwerlastfahrzeug und/oder zum Weiterbewegen von schweren Lasten, die vom Schwerlastfahrzeug abgeladen wurden, externe Hubeinrichtungen erforderlich sind, Diese müssen hinsichtlich ihrer mechanischen Belastbarkeit äußerst stabil ausgebildet sein, um die von ihnen zu bewältigenden schweren Lasten zuverlässig anzuheben, abzulassen oder weiterbewegen zu können.

Da derartige Hubeinrichtungen nur dann zum Einsatz kommen, wenn eine schwere Last auf ein Schwerlastfahrzeug auf- oder abzuladen oder eine vom Schwerlastfahrzeug abgeladene Last eine kurze Strecke weiterzubefördern, ist die Auslastung derartiger mit dem bekannten Schwerlastfahrzeug zusammenarbeitender Hubvorrichtungen nur gering. Sie müssen aber dennoch ständig vorgehalten werden.

Aus der US 2897985 A ist ein selbstladendes Fahrzeug bekannt, welches eine Ladeplattform aufweiset An deren vorderen und an deren hinteren Ende sind jeweils Führungsnuten angeordnet, in denen jeweils ein Laufwagen einer vorderen bzw. einer hinteren Hubvorrichtung angeordnet sind. Diese Hubvorrichtungen weisen jeweils einen Staplermast mit einer Staplereinheit auf. Auch bei diesem bekannten Fahrzeug ist somit ist vorgesehen, dass die beiden Hubvorrichtungen ständig bereit gehalten werden.

Aus der DE 85 30 500 U1 ist ein Wagen, insbesondere ein Bundhubwagen, zum Transport von schweren Lasten bekannt, der ein waagrechtes, U-förmiges Fahrgestell aufweist, das aus einem Querträger und zwei senkrecht davon abstehenden, parallel im Abstand zueinander angeordneten Schenkel besteht, Auf dem Querträger ist ein Hubwerk angeordnet, das eine senkrecht angeordnete Hubsäule und eine darauf auf- und ab bewegliche, zur Aufnahme einer Nutzlast geeignete Gabel aufweist. Die Schenkel weisen senkrecht zu ihrer Längserstrekkung jeweils zwei im Abstand von fest auf dem Fahrboden verlegten Gleisen parallel zueinander zugeordnete Räder auf. Bei jedem Rad ist auf den Schenkeln ein Luftkissen angeordnet.

In der DE 31 14 500 A1 ist ein Bergungs- und Transportfahrzeug beschrieben, dass zum seitlichen Auf- und Abladen und zum Transport von Personenkraftwagen oder dergleichen geeignet ist. Hierzu wird auf einer Ladefläche des Transportfahrzeugs ein Längsschlitten und ein auf diesem befestigter Querschlitten vorgesehen, wobei der Längsschlitten in Längsrichtung der Ladefläche und der Querschlitten quer zur Längsrichtung verschiebbar ist. Am Querschlitten ist eine Hubvorrichtung befestigt, die Tragarme aufweist, mit denen durch eine entsprechende Verschiebung von den Längs- und Querschlitten in der Art eines Gabelstaplers unter einen parkenden Personenkraftwagen gegriffen werden kann.

Die DE 601 15 484 T2 beschreibt eine auf einem Fahrzeug montierbare Hebevorrichtung, welche ein Chassis besitzt, das mit dem Fahrzeug verbindbar ist. Das Chassis weist einen vorderen Satz und einen hinteren Satz von Schienen auf, wobei jeder Satz zwei Schienen umfasst, die das Chassis senkrecht zu der Bewegungsrichtung des Fahrzeugs überqueren. Die Schienen sind mittels geeigneter Einrichtungen mit gegenüberliegenden Seiten des Chassis verbunden. Es ist ein Hebesystem vorgesehen, das beweglich auf jedem Schienensatz montiert ist, wobei sich das Hebesystem vertikal zu den Schienen erstreckt. Es ist mit einer sich senkrecht zu dem Hebesystem erstreckenden Trageinrichtung versehen. Alle Teile sind miteinander über geeignete Verbindungseinrichtungen verbunden und können durch geeignete Betätigungseinrichtungen betätigt werden. Wenigstens einer von den vorderen und hinteren Sätzen der Schienen ist senkrecht zu einem weiteren Satz von Schienen beweglich montiert.

Die DE 74 01 405 U beschreibt ein Transportfahrzeug für Fertiggaragen, Raumzellen oder dergleichen Fertigbaukörpern, das eine Ladefläche aufweist, auf der die zu transportierenden Fertigbaukörper nach Heben, relativ Verschieben zum Fahrzeug und Senken absetzbar sind. Das Transportfahrzeug weist eine erste, am Fahrzeug angeordnete Hubvorrichtung und eine zweite Hubvorrichtung, die mit der ersten Hubvorrichtung über Schlauchleitungen verbunden und sowohl an dem jeweils zu transportierenden Fertigbaukörper als auch am Fahrzeug befestigbar ist, auf. Die fest mit dem Fahrzeug verbundene erste Hubvorrichtung ist als eine gabelstaplerartige Vorrichtung ausgebildet und sowohl um eine fahrzeugfeste, horizontale als auch um eine fahrzeugfeste, vertikale Achse schwenkbar am Fahrzeug gelagert. Im Bereich dieser Hubvorrichtung ist eine ebenfalls am Fahrzeug gelagerte, mindestens mit einer um eine waagrechte Achse drehbaren Rolle versehene Stützvorrichtung für das vordere Ende eines anzuhebenden Fertigbaukörpers angeordnet, die nach Anheben des Fertigbaukörpers nach hinten oben unter das eine Ende des Fertigbaukörpers schwenkbar und in Höhe der Ladefläche des Fahrzeugs befestigbar ist, sobald die zweite Hubvorrichtung zwischen dem hinteren Ende des Fertigbaukörpers und der quer liegenden Mittelebene, in der sich der Schwerpunkt des Fertigbaukörpers befindet, nahe dieser Mittelebene an diesem festgelegt ist und diesen angehoben hat. Auf der Ladefläche des Fahrzeugs ist mindestens ein Schlitten mit einer diesem gegenüber höhenverstellbaren und verschwenkbaren Plattform hin und her verfahrbar angeordnet, der in beiden Bewegungseinrichtungen antreibbar und auch vom Antrieb lösbar ist.

Den drei vorgenannten Fahrzeugen ist gemeinsam, dass die Hubvorrichtung fest mit dem Fahrzeug verbunden ist, Sie sind daher ständig vorgehalten.

Es ist daher Aufgabe der vorliegenden Erfindung, ein Schwerlastfahrzeug der eingangs genannten Art derart weiterzubilden, dass es auch zum Anheben oder Absenken schwerer Lasten geeignet ist. Außerdem soll eine für ein derartiges Schwerlastfahrzeug besonders geeignete Hubvorrichtung geschaffen werden.

Diese Aufgabe wird erfindungsgemäß dadurch gelöst, dass an das Fahrzeugmodul eine Hubvorrichtung lösbar ankoppelbar ist, dass die Hubvorrichtung einen Staplermast mit einer Staplereinheit sowie eine Kupplungseinrichtung besitzt, und dass über diese Kupplungseinrichtungen die lösbar Ankopplung der Hubvorrichtung an das Fahrzeugmodul hergestellt wird.

Durch die erfindungsgemäßen Maßnahmen wird in vorteilhafter Art und Weise ein Schwerlastfahrzeug geschaffen, an dem eine Hubvorrichtung abnehmbar angeordnet ist. Das erfindungsgemäße Schwerlastfahrzeug zeichnet sich also durch seine integrierte Staplerfunktion aus und erlaubt das Anheben, Absetzen oder Weitertransportieren von schweren Lasten. Es ist daher nicht mehr erforderlich, separate Hubvorrichtungen zum Auf- und Abladen von Schwerlasten vorzuhalten. Die erfindungsgemäße Hubvorrichtung sieht vor, dass sie eine mit der Kupplung des Schwerlastfahrzeugs zusammenwirkende Kupplung aufweist. Eine derartige Maßnahme besitzt den Vorteil, dass zum Befestigen der erfindungsgemäßen Hubvorrichtung am erfindungsgemäßen Schwerlastfahrzeug ein bereits vorhandenes Bauteil desselben verwendet werden kann.

Eine weitere vorteilhafte Weiterbildung der Erfindung sieht vor, dass die Hubvorrichtung eine Befestigungseinrichtung aufweist, die mit einer am Transportrahmen des erfindungsgemäßen Schwerlastfahrzeugs vorhandenen Befestigungseinrichtung zusammenwirkt. Eine derartige Maßnahme besitzt nicht nur den Vorteil, dass hierdurch eine mechanisch stabilere Verbindung zwischen der Hubvorrichtung und dem Schwerlastfahrzeug ausgebildet wird. Vielmehr kann zur mechanisch stabilen Befestigung der Hubvorrichtung am Schwerlastfahrzeug wiederum ein bereits vorhandenes Bauteil des Schwerlastfahrzeugs benutzt werden.

Eine weitere vorteilhafte Weiterbildung der Erfindung sieht vor, dass das Fahrzeugmodul des erfindungsgemäßen Schwerlastfahrzeugs Radanordnungen besitzt, durch die der Transportrahmen anhebbar und absenkbar ist. Eine derartige Maßnahme besitzt den Vorteil, dass insbesondere zum Aufnehmen einer Schwerlast der Transportrahmen und somit die mit ihm verbundene Vorrichtung abgesenkt und angehoben werden kann. Das erfindungsgemäße Schwerlastfahrzeug zeichnet sich somit durch eine große Bodenfreiheit der Hubvorrichtung aus.

Eine weitere vorteilhafte Weiterbildung der Erfindung sieht vor, dass die erfindungsgemäße Hubvorrichtung eine Neigungsverstelleinrichtung aufweist, durch welche ein Staplermast der Hubvorrichtung gegenüber der Vertikalen winkelverstellbar ist. Eine derartige Maßnahme besitzt den Vorteil, dass hierdurch in vorteilhafter Art und Weise ein Unterfahren der zu transportierenden Schwerlast durch eine Staplereinrichtung der Hubvorrichtung ermöglicht wird.

Eine weitere vorteilhafte Weiterbildung der Erfindung sieht vor, dass die Neigungsverstelleinrichtung ein Befestigungselement aufweist, durch welches sie am Schwerlastfahrzeug befestigbar ist. Vorzugsweise ist hierzu vorgesehen, dass das Befestigungselement als ein Querbalken ausgebildet ist, welcher an Befestigungseinrichtungen des Transportfahrzeugs lösbar befestigbar ist.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der Figuren beschrieben wird. Es zeigen:
- Figur 1: eine perspektivische Darstellung eines Ausführungsbeispiels eines Schwerlastfahrzeugs mit einer Hubvorrichtung,
- Figur 2: das Ausführungsbeispiel der Figur 1 mit abgenommener Hubvorrichtung,
- Figur 3: eine Seitenansicht des Ausführungsbeispiels mit einer abgesenkten Hubvorrichtung und angehobenem Fahrwerk,
- Figur 4: die Seitenansicht der Figur 3 mit abgesenktem Fahrwerk,
- Figur 5: eine Vorderansicht des Schwerlastfahrzeugs der Figur 1,
- Figur 6: eine Draufsicht auf das Ausführungsbeispiel,
- Figur 7: eine Seitenansicht des Schwerlastfahrzeugs der Figur 2,
- Figur 8: eine Darstellung eines Fahrzeugsmoduls des Schwerlastfahrzeugs ohne Hubvorrichtung,
- Figuren 9 bis 14: ein Ausführungsbeispiel der Hubvorrichtung der Figuren 1 bis 8 in unterschiedlichen Ansichten.

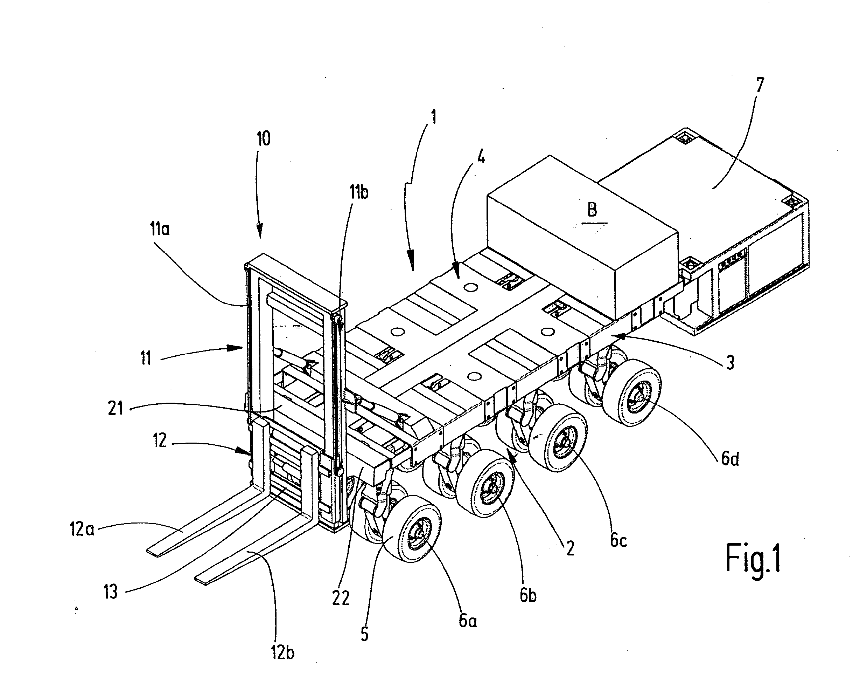

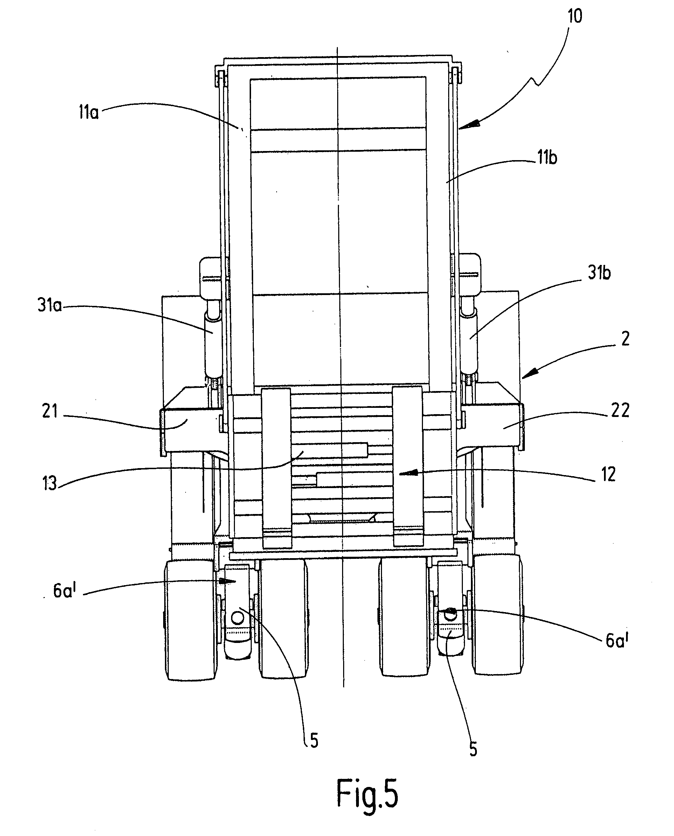

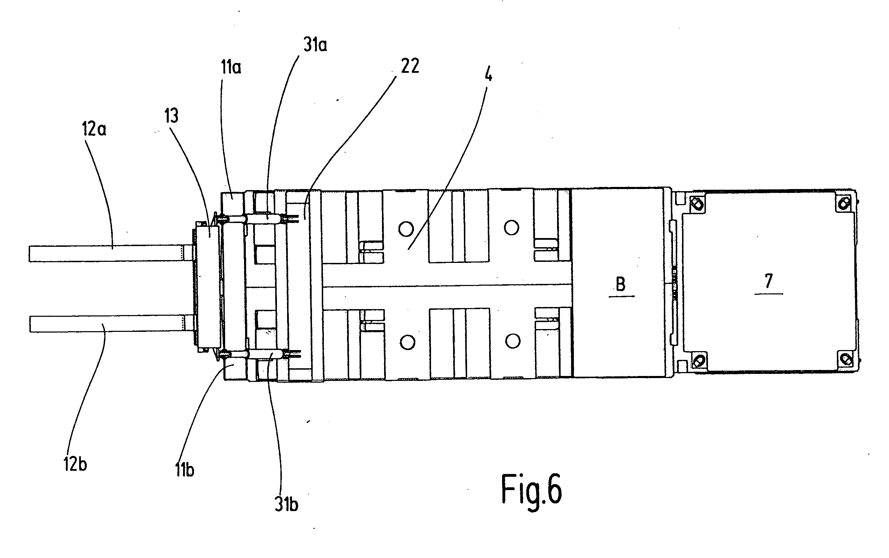

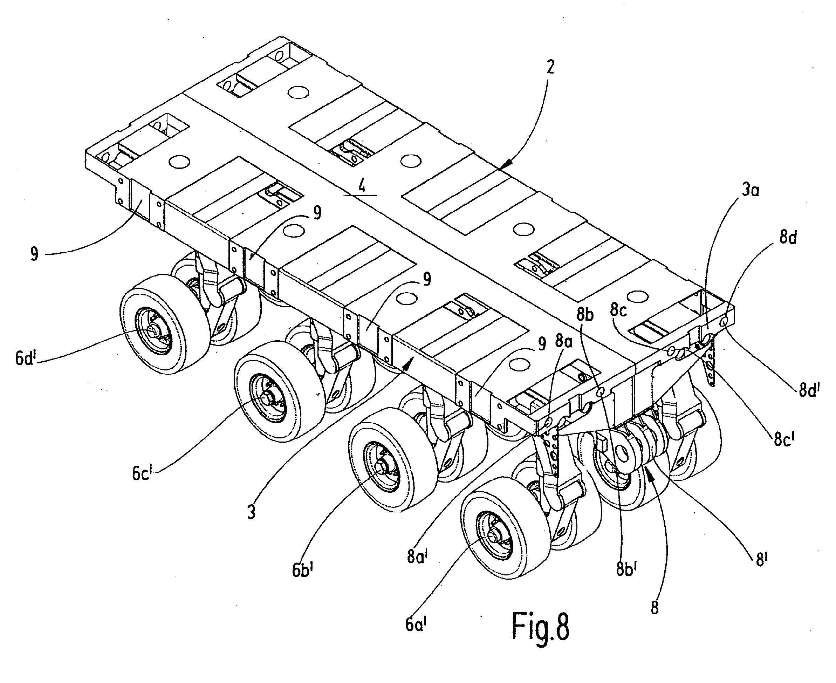

In den Figuren 1 bis 8 ist ein allgemein mit 1 bezeichnetes Schwerlastfahrzeug dargestellt, welches sich grundsätzlich in ein Fahrzeugmodul 2 und eine Hubvorrichtung 10 gliedert. Das in Figur 8 näher dargestellte Fahrzeugmodul 2 weist einen Transportrahmen 3 mit einer Transportplattform 4 auf, welche von mit Pendelachsen 5 ausgerüsteten Radanordnungen 6 mit Achsen 6a-6d und 6a'-6d' eines Fahrwerks des Schwerlastfahrzeugs getragen wird. Die Achsen 6a-6d der Radanordnungen 6 sind lenkbar und eine Antriebseinrichtung 7 sorgt für die für den Antrieb der Pendelachsen 5 sowie die Lenkung derselben erforderlichen Antriebsenergie.

Derartige Fahrzeugmodule 2 werden regelmäßig in Längsrichtung und/oder in Querrichtung mit weiteren gleich aufgebauten Fahrzeugmodulen 2 zur Ausbildung eines Fahrzeug-Verbunds mechanisch, antriebstechnisch und steuerungstechnisch gekoppelt. Das Fahrzeugmodul 2 weist zur mechanischen Verbindung mit einem weiteren Fahrzeugmodul zumindest an einer Querseite eine Kupplungseinrichtung 8 auf (siehe Figur 8), mit der es in Längsrichtung mit einem anderen Fahrzeugmodul verbindbar ist. Im hier gezeigten Fall ist die Kupplungseinrichtung 8 als eine Lamellenkupplung 8' ausgebildet, die an einem Querbalken 3a des Transportrahmens 3 angebracht ist. Wie ebenfalls am besten aus Figur 8 ersichtlich ist, weist dieser Querbalken 3a des Transportrahmens 3 vier Öffnungen 8a-8d auf, welche zur mechanisch stabilen Verbindung zweier hintereinander angeordneter Fahrzeugmodule 2 dienen. Hierzu werden in die Öffnungen 8a-8d des Querbalkens 3a des Transportrahmens 3 sowie in die Öffnungen eines entsprechend konfigurierten Querbalkens des in Längsrichtung anschließenden Fahrzeugmoduls Verbindungsmittel wie Bolzen eingebracht, welche für eine mechanisch stabile Verbindung dieser beiden aneinander gekoppelten Fahrzeugmodule sorgen, so dass durch die Transportflächen 4 dieser beiden Fahrzeugmodule eine Transportfläche des durch die beiden Fahrzeugmodule 2 ausgebildeten Fahrzeug-Verbunds ausgebildet wird.

Um eine mechanische Querverbindung zweier parallel angeordneter Fahrzeugmodule herstellen zu können, sind an mindestens einer Längsseite des Fahrzeugsmoduls 2 ein oder mehrere Befestigungselemente 9 vorgesehen, mittels derer parallel angeordnete Fahrzeugmodule mechanisch verbunden werden können.

Ein derartiger Aufbau eines Fahrzeugmoduls 2 sowie deren Verbindung zu einem Fahrzeug-Verbund sind bekannt und müssen daher nicht mehr näher beschrieben werden.

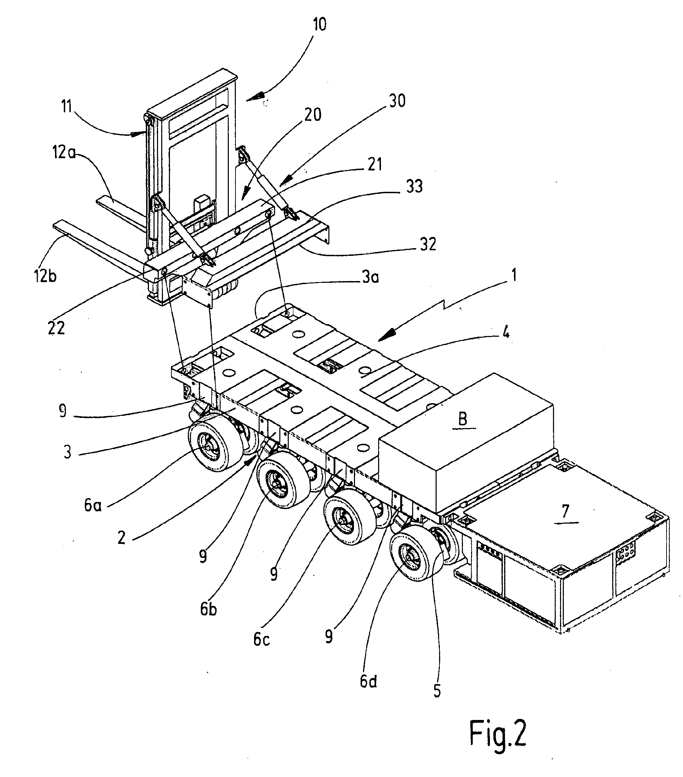

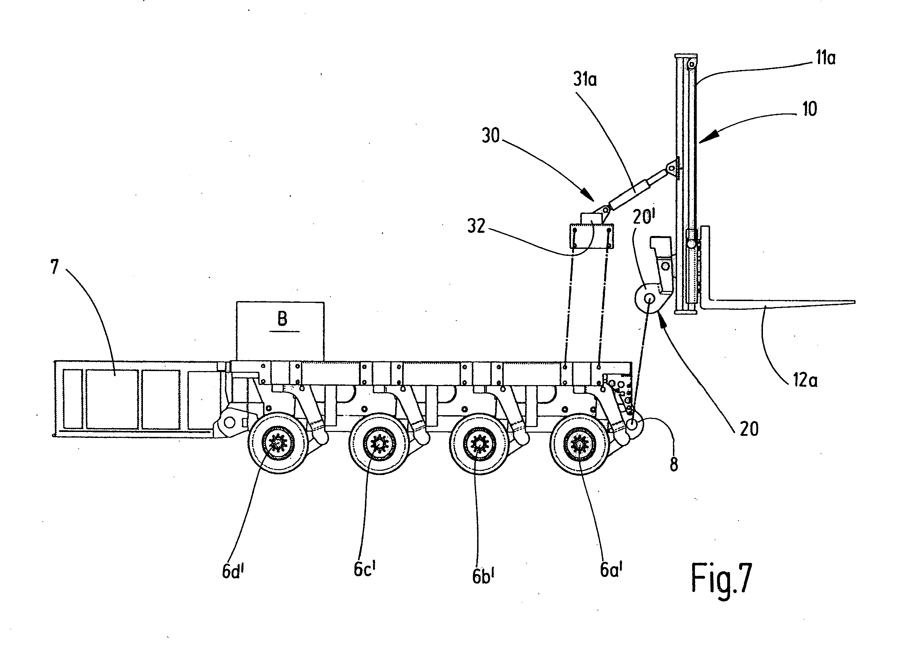

Wesentlich ist nun, dass die Hubvorrichtung 10 - wie am besten aus den Figuren 2 und 7 ersichtlich ist - abnehmbar am Fahrzeugmodul 2 angeordnet ist. Das Schwerlastfahrzeug 1 ist somit nicht nur zum Transport schwerer Lasten geeignet, sondern es kann - wie nachstehend beschrieben - durch das Anbringen der Hubvorrichtung 10 einfach zu einem Schwerlastfahrzeug mit einer Staplerfunktion umgerüstet werden. Die am Fahrzeugmodul 2 angeordnete Hubvorrichtung 10 erlaubt dann das Anheben, Weitertransportieren und Absenken von Schwerlasten. Die beschriebenen Maßnahmen besitzen daher den Vorteil, dass nun nicht mehr - wie es bisher der Fall war - zum Auf- oder Abladen schwerer Lasten auf die oder vor der Transportplattform 4 eine externe Hubvorrichtung vorgehalten werden musste, die - wie eingangs beschrieben - nur eine geringe Auslastung hatte. Vielmehr muss in vorteilhafter Art und Weise nurmehr die Hubvorrichtung 10 bereitgestellt und im Bedarfsfall an das Fahrzeugmodul 2 angekoppelt werden.

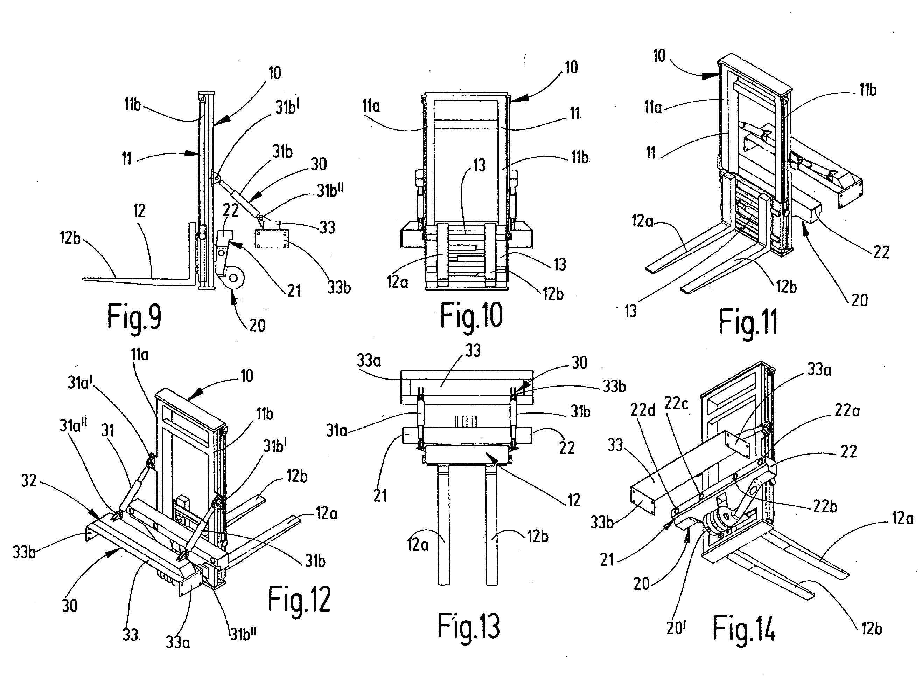

Diese Hubvorrichtung 10 ist in den Figuren 9 bis 14 im Detail dargestellt. Sie weist einen Staplermast 11 auf, an dem eine Staplereinheit 12 auf- und abbewegbar verschiebbar ist. Die Staplereinheit 12 besitzt im hier beschriebenen Fall zwei zur Lastaufnahme dienende Zinken 12a und 12b, die an einem entlang von Längssäulen 11a, 11b des Staplermasts 11 verschiebbare Querträger 13 angeordnet sind. Die Bewegung des Querträgers 13 entlang der Säulen 11a, 11 b des Staplermasts 11 wird durch eine an und für sich bekannte und daher in den Figuren nicht gezeigte Antriebseinrichtung bewerkstelligt. Ein derartiger Staplermast 11 ist grundsätzlich bekannt, so dass er nicht mehr näher beschrieben werden muss.

An der der Staplereinheit 12 gegenüberliegenden Seite des Staplermasts 11 ist eine am besten aus den Figuren 9 und 14 ersichtliche Kupplungseinrichtung 20 angeordnet, welche dazu dient, die Hubvorrichtung 10 am Fahrzeugmodul 2 lösbar zu befestigen. Hierbei ist vorzugsweise vorgesehen, dass die Kupplungseinrichtung 20 der Hubvorrichtung 10 derart ausgebildet ist, dass sie mit der Kupplungseinrichtung 8 des Fahrzeugmoduls 2 bei der Montage der Hubvorrichtung 10 zusammenwirkt, die - wie eingangs erläutert - primär dazu dient, das Fahrzeugmodul 2 mit einem weiteren gleichartig aufgebauten Fahrzeugmodul in Längsrichtung mechanisch zu verbinden, so dass durch diese beiden Fahrzeugmodule 2 ein aus zwei hintereinander angeordneten Fahrzeugmodulen 2 bestehender Fahrzeug-Verbund ausgebildet wird. Die Verwendung dieser bereits vorhandenen Kupplungseinrichtung 8 des Fahrzeugmoduls 2 zum Ankuppeln der Hubvorrichtung 10 besitzt den Vorteil, dass ein bereits für andere Zwecke vorhandenes Bauteil zur Anbringung der Hubvorrichtung 10 an das Fahrzeugmodul 2 verwendet werden kann. Dies ist nicht nur kostenmäßig von Vorteil. Vielmehr stellen derartige Kupplungen 8 standardisierte mechanische Schnittstellen zwischen einzelnen Fahrzeugmodulen 2 dar, so dass die Hubvorrichtung 10 nicht nur an einem einzigen, sondern an einer Vielzahl von zu einem Fahrzeug-Verbund zusammenkoppelbaren Fahrzeugmodulen 2 verwendbar ist. Demzufolge ist bevorzugt, dass die Kupplungseinrichtung 20 eine ihrem Aufbau der Lamellenkupplung 8' des Fahrzeugsmoduls 2 entsprechende Lamellenkupplung 20' aufweist.

Die Kupplungseinrichtung 20 der Hubvorrichtung 10 weist des Weiteren vorzugsweise ein Befestigungselement 21 auf, welches mit den als Befestigungsöffnungen 8a'-8d' ausgebildeten Befestigungselementen 8a-8d des Transportrahmens 3 zusammenwirkt. Hierdurch wird die Stabilität der mechanischen Befestigung der Hubvorrichtung 10 am Fahrzeugmodul 2 weiter erhöht. Indem wiederum vorgesehen ist, dass zur mechanischen Verbindung der Hubvorrichtung 10 und des Fahrzeugmoduls 2 bereits für andere Zwecke vorhandene Befestigungseinrichtungen 8a-8d verwendet werden, ist nicht nur die Verwendbarkeit der Hubvorrichtung 10 bei einer Vielzahl von gleich aufgebauten Fahrzeugmodulen 2 gewährleistet. Diese Maßnahme ist auch unter Kostengesichtspunkten vorteilhaft.

Im hier beschriebenen Ausführungsbeispiel weist die Befestigungseinrichtung 21 einen Querbalken 22 mit Befestigungsöffnungen 22a-22d (siehe Figur 14) auf, der durch entsprechende Verbindungsmittel wie z. B. Bolzen, mit dem Transportrahmen 3 des Fahrzeugmoduls 2 mechanisch verbindbar ist, indem der Querbalken 22 der Befestigungseinrichtung 21 an dem Querbalken 3a des Transportrahmens 3 angelegt und Bolzen (nicht gezeigt) durch die Befestigungsöffnungen 22a-22d des Querbalkens 22 und die Befestigungsöffnungen 8a'-8d' des Querbalkens 3a des Transportrahmens 3 geschoben und arretiert werden.

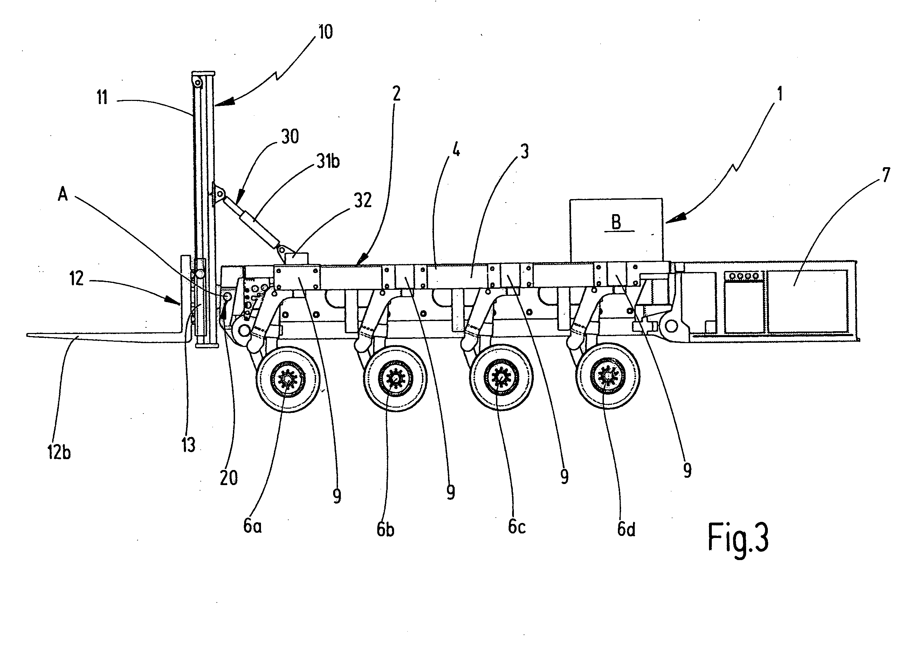

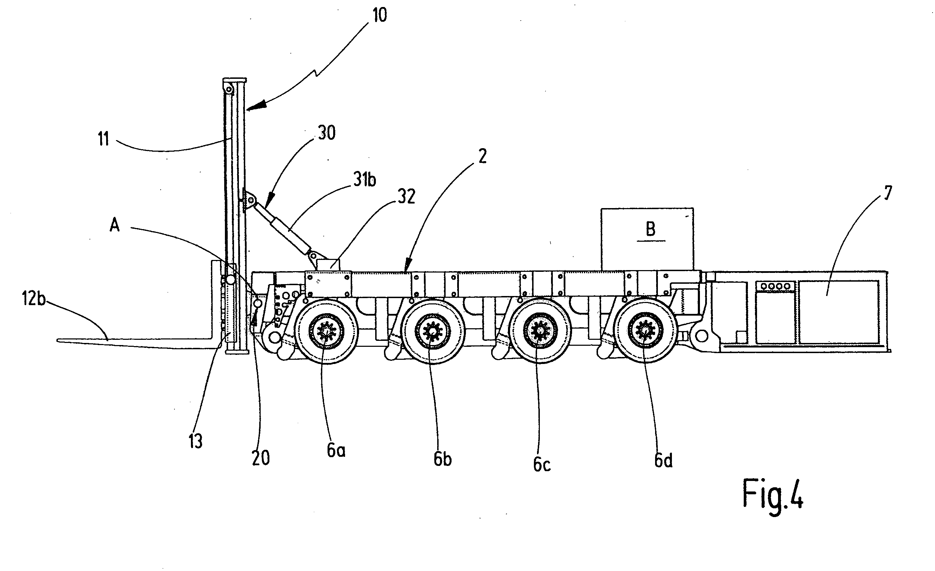

Es wird bevorzugt, dass - wie der Vergleich der Figuren 3 und 4 zeigt - das Fahrzeugmodul 2 höhenverstellbar ausgebildet ist, so dass der Abstand des Transportrahmens 3 zu dem das Fahrzeugmodul 2 tragenden Untergrund veränderlich ist. Hierzu wird bevorzugt, dass die Radanordnungen 6 ein Anheben und Absenken des Transportrahmens 3 ermöglichen, indem der Abstand der Achsen 6a-6d zum Transportrahmen 3 vergrößert bzw. verkleinert wird. Derartige Radanordnungen 6 sind bekannt und müssen daher nicht mehr beschrieben werden. Die zur Durchführung dieser Hubbewegung erforderliche Energie wird wieder von der Antriebseinheit 7 bereitgestellt.

Um nun eine Schwerlast aufzunehmen, werden die Radanordnungen 6 aus ihrer in Figur 3 gezeigten angehobenen Stellung in ihre in Figur 4 gezeigte abgesenkte Stellung bewegt, wodurch der Transportrahmen 3 sowie die Transportfläche 4 abgesenkt werden. Wie ein Vergleich der beiden Figuren zeigt, befinden sich nun die Zinken 12a und 12b der Staplereinheit 12 in einer bodennahen Position. Die Aufnahme einer Schwerlast ist dadurch leicht möglich.

Zum Weitertransport der aufgenommenen Schwerlast werden dann die Radanordnungen 6 wieder in Figur 3 gezeigte angehobene Position bewegt. Eine weitere Anhebung der vom Fahrzeugmodul 2 zu transportierenden Schwerlast erfolgt dann durch eine Verschiebung der Staplereinheit 12 entlang der Säulen 11a, 11b des Staplermastes 11. Die beschriebene Vorgangsweise zeichnet sich dadurch aus, dass - wie aus Figur 3 ersichtlich - die Hubvorrichtung 10 eine große Bodenfreiheit besitzt.

Wenn eine Schwerlast nicht unmittelbar vom Boden aufgenommen werden soll, wenn z.B. in einer entsprechenden Höhe an der Schwerlast geeignete Angriffpunkte für die Zinken 12a und 12b vorhanden sind, kann natürlich das Absenken der Radanordnungen 6 und somit des Staplermastes 11 entfallen.

Die Hubvorrichtung 10 weist vorzugsweise eine Neigungsverstelleinrichtung 30 auf, welche dazu dient, den Neigungswinkel des Staplermasts 11 der Hubvorrichtung 10 gegenüber der Vertikalen zu verändern, so dass durch die Zinken 12a-12d der Staplereinheit 12 die anzuhebende Last unterfahren werden kann. Von Vorteil hierbei ist, dass die Hubvorrichtung 10 über die Kupplungseinrichtung 20 drehbar mit dem Fahrzeugmodul 2 verbunden ist. Der Staplermast 11 ist um eine dadurch festgelegte Drehachse A wie nachstehend beschrieben verschwenkbar ist, so dass der Winkel, welcher die Staplereinheit 12 und insbesondere die beiden Zinken 12a und 12b zur Vertikalen einschließen, veränderbar ist.

Die Neigungsverstelleinrichtung 30 besitzt zur Durchführung dieser Schwenkbewegung im hier beschriebenen Fall zwei Hydraulik-Zylinder 31a, 31b, die mit einem Ende 31 a', 31 b' an jeweils einer Säule 11 a, 11 b des Staplermasts 11 gelenkig angreifen. Ihr zweites Ende 31 a", 31 b" ist an einem hier als Querbalken 33 ausgebildeten Befestigungselement 32 angelenkt. Der Querbalken 33 besitzt eine Länge, die der Breite des Transportrahmens 3 des Fahrzeugmoduls 2 entspricht und weist zwei Seitenwangen 33a und 33b auf. Um das Befestigungselement 32 am Transportrahmen 3 des Fahrzeugmoduls 2 anzubringen, wird - wie am besten aus Figur 2 ersichtlich - der Querbalken 33 auf die Transportfläche 4 des Fahrzeugmoduls 2 aufgesetzt, so dass die Seitenwangen 33a, 33b des Befestigungselements 32 die entsprechende Seitenflächen des Transportrahmens 3 derart übergreifen, so dass die Seitenwangen 33a, 33b des Querbalkens 33 des Befestigungselements 32 an den Befestigungseinrichtungen 9 des Transportrahmens 3 befestigbar sind.

Der Antrieb der Hydraulikzylinder 31 a, 31 b erfolgt hierbei wiederum durch die Antriebseinrichtung 7 des Fahrzeugmoduls 2.

Die Hubvorrichtung 10 ist nicht nur mechanisch, sondern auch antriebstechnisch und steuerungstechnisch mit dem Fahrzeugmodul 2 verbunden. Für Letzteres ist vorgesehen, dass die Hubvorrichtung 10 eine elektronische Schnittstelle aufweist, mit der sie mit der Steuerung des Fahrzeugmoduls 2 verbunden werden kann. Dadurch ist es möglich, die Hubvorrichtung 10 über die bereits vorhandene Steuerung anzusteuern.

Bei der vorstehenden Beschreibung wird davon ausgegangen, dass die Hubvorrichtung 10 am hinteren Querbalken 3a des Transportrahmens 3 des Fahrzeugmoduls 2 angeordnet wird. Dies besitzt den Vorteil, dass hierdurch die bereits vorhandene Kupplungseinrichtung 8 zur Befestigung der Hubvorrichtung 10 verwendet werden kann. Natürlich ist es auch möglich, dass die Hubvorrichtung 10 an einer anderen Stelle des Fahrzeugsmoduls 2, insbesondere also an dessen Längsseite, angeordnet wird.

Bei der vorstehenden Beschreibung wird des Weiteren davon ausgegangen, dass das Fahrzeugmodul 2 ein selbstangetriebenes Fahrzeugmodul ist. Natürlich ist es auch möglich, die Hubvorrichtung 10 an einem von einem Zugfahrzeug gezogenen Fahrzeugmodul 2 anzubringen.

Wie besonders aus Figur 2 ersichtlich ist, ist beim Betrieb des beschriebenen Schwerlastfahrzeugs 1 mit Staplerfunktion vorgesehen, dass auf der Transportfläche 4 - sofern erforderlich - ein Ballast B angeordnet, die ein Gegengewicht zu der von der Hubvorrichtung 10 anzuhebenden Last bildet.

Zusammenfassend ist festzuhalten, dass durch die beschriebenen Maßnahmen ein Schwerlastfahrzeug 1 mit einer Staplerfunktion ausgebildet wird. Die an das Fahrzeugmodul 2 des Schwerlasfifahrzeugs 1 ankoppelbare Hubvorrichtung 10 erlaubt es daher in einfacher Art und Weise, ein konventionelles Fahrzeugmodul 2 mit nur geringfügigen Modifikationen auch für einen Staplerbetrieb einzusetzen, um damit schwere Lasten anzuheben, zu transportieren und abzusenken. Es ist somit nicht mehr erforderlich, externe Hubvorrichtungen, die nur eine geringe Auslastung besitzen, vorzuhalten. Vielmehr kann durch einen einfach durchzuführenden Umbau ein konventionelles Fahrzeugmodul 2 entsprechend adaptiert werden.

## Patentansprüche

1. Schwerlastfahrzeug, das ein Fahrzeugmodul (2) mit einem Transportrahmen (3) und einer Transportplattform (4) besitzt, wobei das Fahrzeugmodul (2) eine zur Ankopplung mindestens eines weiteren Fahrzeugmoduls dienende Kupplungseinrichtung (8) aufweist, **dadurch gekennzeichnet, dass** an das Fahrzeugmodul (2) eine Hubvorrichtung (10) lösbar ankoppelbar ist, dass die Hubvorrichtung (10) einen Staplermast (11) mit einer Staplereinheit (12) sowie eine Kupplungseinrichtung (20) besitzt, und dass über diese Kupplungseinrichtungen (8, 20) die lösbare Ankopplung der Hubvorrichtung (10) an das Fahrzeugmodul (2) hergestellt wird.

2. Schwerlastfahrzeug nach Anspruch 1, **dadurch gekennzeichnet, dass** die Kupplungseinrichtung (20) mit der Kupplungseinrichtung (8) des Fahrzeugmoduls (2) verschwenkbar verbunden ist.

3. Schwerlastfahrzeug nach Anspruch 2, **dadurch gekennzeichnet, dass** die Kupplungseinrichtung (8) des Fahrzeugmoduls (2) als eine Lamellenkupplung (8') und die Kupplungseinrichtung (20) der Hubvorrichtung (10) als ein in diese Lamellenkupplung (8') eingreifende weitere Lamellenkupplung (20') ausgebildet ist.

4. Schwerlastfahrzeug nach einem der vorangehenden Ansprüche, **dadurch gekennzeichnet, dass** die Hubvorrichtung (10) eine Befestigungseinrichtung (21) aufweist, die mit am Transportrahmen (3) angebrachten Befestigungselementen (8a-8d) lösbar verbindbar ist.

5. Schwerlastfahrzeug nach Anspruch 4, **dadurch gekennzeichnet, dass** die Befestigungseinrichtung (21) der Kupplungseinrichtung (20) der Hubvorrichtung (10) als ein Querbalken (22) ausgebildet ist, der Befestigungsöffnungen (22a-22d) besitzt, durch die Verbindungsmittel durchschiebbar sind, die in entsprechend konfigurierte Befestigungsöffnungen (8a'-8d') des Querbalkens (3a) des Transportrahmens (3) des Fahrzeugsmoduls einschiebbar sind.

6. Schwerlastfahrzeug nach einem der vorangehenden Ansprüche, **dadurch gekennzeichnet, dass** das Fahrzeugmodul (2) Randanordnungen (6a-6d; 6a'-6d') besitzt, durch die der Transportrahmen (3) anhebbar und absenkbar ist.

7. Schwerlastfahrzeug nach einem der vorangehenden Ansprüche, **dadurch gekennzeichnet, dass** die Hubvorrichtung (10) eine Neigungsverstelleinrichtung (30) aufweist, durch die der Neigungswinkel des Staplermasts (11) gegenüber der Vertikalen veränderbar ist.

8. Schwerlastfahrzeug nach Anspruch 7, **dadurch gekennzeichnet, dass** die Neigungsverstelleinrichtung (30) ein Befestigungselement (32) aufweist, über welches der Staplermast (11), vorzugsweise über Zylinder (31 a, 31b) mit dem Fahrzeugmodul (2) verbindbar ist.

9. Schwerlastfahrzeug nach Anspruch 8, **dadurch gekennzeichnet, dass** das Befestigungselement (32) der Neigungsverstelleinrichtung (30) als ein Querbalken (33) ausgebildet ist, der Seitenwangen (33a, 33b) besitzt, welche mit dem Transportrahmen (3) des Fahrzeugsmoduls (2) verbindbar sind.

10. Hubvorrichtung für ein Schwerlastfahrzeug nach einem der vorangehenden Ansprüche, **dadurch gekennzeichnet, dass** die Hubvorrichtung (10) einen Staplermast (11) einer Staplereinrichtung (12) besitzt, die verschiebbar am Staplermast (11) angeordnet ist, und dass die Hubvorrichtung (10) eine Kupplungseinrichtung (20) aufweist, über die sie mit einer entsprechend konfigurierten Kupplungseinrichtung (8) des Fahrzeugmoduls (2) befestigbar ist.

11. Hubvorrichtung nach Anspruch 0, **dadurch gekennzeichnet, dass** die Kupplungseinrichtung (20) ein Befestigungselement (21) aufweist, welches am Fahrzeugmodul (2) befestigbar ist.

12. Hubvorrichtung nach einem der Ansprüche 10 oder 11, **dadurch gekennzeichnet, dass** die Hubvorrichtung (10) eine Neigungsverstelleinrichtung (30) aufweist.

## Claims

1. Heavy load vehicle, which has a vehicle module (2) having a transport frame (3) and a transport platform (4), whereby the vehicle module (2) has got coupling means (8) for coupling at least one further vehicle module, **characterized in that** a lifting device (10) can be releasable coupled with the vehicle module (2), that the lifting device (10) has got a lift mast (11) with a lifting unit (12) as well as a coupling unit (20), and that by means of these coupling units (8, 20) the releasable coupling of the lifting device (10) with the vehicle module (2) is made.

2. Heavy load vehicle according to claim 1, **characterized in that** the coupling unit (20) is pivotably connected with the coupling unit (8) of the vehicle module (2).

3. Heavy load vehicle according to claim 2, **characterized in that** the coupling unit (8) of the vehicle module (2) is formed as multi-disc clutch (8') and the coupling unit (20) of the lifting device (10) is formed as a further multi-disc clutch (20') engaging with said multi-disc clutch (8').

4. Heavy load vehicle according to one of the previous claims, **characterized in that** the lifting device (10) has got a fixing unit (21), which can be releasably connected with fixing elements (8a-8d) provided on the transport frame (3).

5. Heavy load vehicle according to claim 4, **characterized in that** the fixing unit (21) of the coupling unit (20) of the lifting device (10) is formed as a cross bar (22), which has fixing openings (22a-22d), through which connecting means can be moved, which can be inserted in the correspondingly configured fixing openings (8a'-8d') of the cross bar (3a) of the transport frame (3) of the vehicle module.

6. Heavy load vehicle according to one of the previous claims, **characterized in that** the vehicle module (2) has got wheel arrangements (6a-6d; 6a'-6d'), by which the transport frame (3) can be raised and lowered.

7. Heavy load vehicle according to one of the previous claims, **characterized in that** the lifting device (10) has got inclination adjustment means (30), by which the inclination angle of the lift mast (11) can be altered in respect to the vertical.

8. Heavy load vehicle according to claim 7, **characterized in that** the inclination adjustment means (30) has got a fixing element (32), by which the lift mast (11) can be connected with the vehicle module (2), preferably by means of cylinders (31a, 31 b).

9. Heavy load vehicle according to claim 8, **characterized in that** the fixing element (32) of the inclination adjustment means (30) is formed as a cross bar (33), which has got side plates (33a, 33b), which can be connected with the transport frame (3) of the vehicle module (2).

10. Lifting device for a heavy load vehicle according to one of the previous claims, **characterized in that** the lifting device (10) has got a lift mast (11) with a lifting unit (12), which is arranged movable on the lift mast (11), and that the lifting device (10) has got a coupling unit (20), by which it can be connected with a correspondingly configured coupling unit (8) of the vehicle module (2).

11. Lifting device according to claim 10, **characterized in that** the coupling unit (20) has got a fixing element (21), which can be connected with the vehicle module (2).

12. Lifting device according to one of the claims 10 or 11, **characterized in that** the lifting device (10) has got an inclination adjustment means (30).

## Revendications

1. Poids-lourd, qui possède un module de véhicule (2) pourvu d'un châssis de transport (3) et une plate-forme de transport (4), dans lequel le module de véhicule (2) présente un système d'accouplement (8) servant à l'accouplement au moins d'un autre module de véhicule, **caractérisé en ce qu'**un dispositif de levage (10) peut être accouplé de manière amovible au niveau du module de véhicule (2), **en ce que** le dispositif de levage (10) possède un mât de chariot élévateur (11) pourvu d'une unité formant chariot élévateur (12) ainsi qu'un système d'accouplement (20), et **en ce que** l'accouplement amovible du dispositif de levage (10) au module de véhicule (2) est établi par l'intermédiaire des dispositifs d'accouplement (8, 20).

2. Poids-lourd selon la revendication 1, **caractérisé en ce que** le système d'accouplement (20) est relié de manière à pouvoir pivoter au système d'accouplement (8) du module de véhicule (2).

3. Poids-lourd selon la revendication 2, **caractérisé en ce que** le système d'accouplement (8) du module de véhicule (2) est réalisé sous la forme d'un accouplement à lamelles (8'), et **en ce que** le système d'accouplement (20) du dispositif de levage (10) est réalisé sous la forme d'un, autre accouplement à lamelles (20') venant en prise avec ledit accouplement à lamelles (8').

4. Poids-lourd selon l'une quelconque des revendications précédentes, **caractérisé en ce que** le dispositif de levage (10) présente un système de fixation (21), qui peut être relié de manière amovible à des éléments de fixation (8a-8d) installés au niveau du châssis de transport (3).

5. Poids-lourd selon la revendication 4, **caractérisé en ce que** le système de fixation (21) du système d'accouplement (20) du dispositif de levage (10) est réalisé sous la forme d'une poutre transversale (22), qui possède des ouvertures de fixation (22a-22d), à travers lesquelles des moyens de liaison peuvent être glissés, lesquels peuvent être enfilés dans des ouvertures de fixation (8a'-8d'), configurées de manière correspondante, de la poutre transversale (3a) du châssis de support (3) du module de véhicule.

6. Poids-lourd selon l'une quelconque des revendications précédentes, **caractérisé en ce que** le module de véhicule (2) possède des ensembles de bords (6a-6d ; 6a'-6d'), par lesquels le châssis de transport (3) peut être relevé et abaissé.

7. Poids-lourd selon l'une quelconque des revendications précédentes, **caractérisé en ce que** le dispositif de levage (10) présente un système d'ajustement d'inclinaison (30), par lequel l'angle d'inclinaison du mât de chariot élévateur (11) peut être modifié par rapport à la verticale.

8. Poids-lourd selon la revendication 7, **caractérisé en ce que** le système d'ajustement d'inclinaison (30) présente un élément de fixation (32), par l'intermédiaire duquel le mât de chariot élévateur (11) peut être relié au module de véhicule (2), de préférence par l'intermédiaire de cylindres (31a, 31b).

9. Poids-lourd selon la revendication 8, **caractérisé en ce que** l'élément de fixation (32) du système d'ajustement d'inclinaison (30) est réalisé sous la forme d'une poutre transversale (33), qui possède des joues latérales (33a, 33b), qui peuvent être reliées au châssis de transport (3) du module de véhicule (2).

10. Dispositif de levage pour un poids-lourd selon l'une quelconque des revendications précédentes, **caractérisé en ce que** le dispositif de levage (10) possède un mât de chariot élévateur (11) d'un système formant chariot élévateur (12), qui est disposé de manière à pouvoir être coulissé au niveau du mât de chariot élévateur (11), et **en ce que** le dispositif de levage (10) présente un système d'accouplement (20), par l'intermédiaire duquel le dispositif de levage peut être fixé avec un système d'accouplement (8) configuré de manière correspondante du module de véhicule (2).

11. Poids-lourd selon la revendication 10, **caractérisé en ce que** le système d'accouplement (20) présente un élément de fixation (21), qui peut être fixé au niveau du module de véhicule (2).

12. Poids-lourd selon l'une quelconque des revendications 10 ou 11, **caractérisé en ce que** le dispositif de levage (10) présente un système d'ajustement d'inclinaison (30).
